# EUROPEAN PATENT APPLICATION

(11) **EP 4 789 590 A1**
(43) Date of publication of application: **12.08.2026**
(21) Application number: 26156293.8
(22) Date of filing: 04.02.2026
(51) Int. Cl.: A47J 31/52, A47J 31/44

(54) **COFFEE MACHINE WITH SMART PORTAFILTER**

(30) Priority: 04.02.2025 IT 202500002025
(71) Applicant: VEA GROUP S.P.A., 24121 Bergamo (IT)
(72) Inventor: DOGLIONI MAJER, Umberto, 24040 CHIGNOLO D'ISOLA (BG) (IT); CERIANI, Alessandro, 24040 CHIGNOLO D'ISOLA (BG) (IT)
(74) Representative: Studio Torta S.p.A.

(57) **Abstract**

A beverage preparation machine (1) comprising:
a pressurised hot water production assembly (4); and
a coffee beverage dispensing assembly (5) configured to receive pressurised hot water from the pressurised hot water production unit (4) and to prepare and dispense beverages by brewing a brewing material with pressurised hot water;
the coffee beverage dispensing assembly (5) comprises:
a hot water dispensing body (6) configured to dispense pressurised hot water for producing beverages;
a portafilter (7) configured to contain a brewing material and to be releasably couplable to the hot water dispensing body (6) to receive hot water therefrom for brewing the brewing material and producing a beverage by brewing the brewing material with pressurised hot water;
an automation device (29) operable to fluid-tighten the portafilter (7) to and release the portafilter (7) from the hot water dispensing body (6); and
a user interface (36) configured to allow coffee beverages dispensable by the coffee machine (1) to be selected by a user, the portafilter (7) to be fluid-tightened to and released from the hot water dispensing body (6) and beverage dispensing to be started and stopped;
the user interface (36) comprises a machine interface section (37) and a portafilter interface section (38) respectively carried by the beverage preparation machine (1) and by the portafilter (7) and designed to wirelessly mutually communicate.

## Description

### TECHNICAL FIELD OF THE INVENTION

The present invention relates generally to the sector of machines for the preparation of beverages, in particular semi-automatic coffee machines, for professional bar or domestic use, to which the following description will make explicit reference without thereby losing generality.

### BACKGROUND OF THE INVENTION

As is known, semi-automatic coffee machines includes those machines in which preparation of coffee beverages is largely performed manually by an operator, while others phases are managed automatically by an electronic control unit.

A typical operation that must be carried out manually is, for example, loading of ground coffee and normally requires that the operator uncouple the portafilter from the coffee machine to fill it with a dose of loose ground coffee or coffee contained in a single-use pod, and then couples the portafilter to the coffee machine so that the latter is fluid-tightened to a hot water dispensing body and can receive therefrom an amount of hot water sufficient for the preparation of a coffee beverage by brewing of the ground coffee contained in the portafilter. Other operations controlled directly by the operator, normally by means of one or different buttons, are start and stop of the beverage dispensing. In some types of semi-automatic coffee machines, beverage dispensing is stopped automatically based on a setting of the amount of coffee beverage desired in the cup.

In general, the fluid-tightening of the portafilter to the hot water dispensing body is achieved by means of a bayonet joint formed by at least two radial tabs carried by the portafilter and by as many slots formed on the hot water dispensing body. Each tab, or, alternatively, each slot, is partially delimited by an inclined plane, which, when the portafilter is coupled to the hot water dispensing body and the tabs are moved along the respective slots, engages a matching plane formed on the corresponding slot, or, respectively, on the corresponding tab, so as to cause an axial displacement of the portafilter towards the hot water dispensing body and consequent fluid-tightening of the free edge of the portafilter against a front gasket carried by the hot water dispensing body.

From the operator's point of view, the fluid-tightening of the portafilter to the hot water dispensing body involves two operations in sequence to bring the portafilter first into an insertion configuration in the hot water dispensing body and then into a fluid-tightening configuration, in which it is fluid-tightened to the hot water dispensing body. The insertion configuration is usually reached by means of a vertical displacement of the portafilter from the bottom upwards so as to frontally couple the portafilter to the hot water dispensing body and align the tabs with the respective slots. Typically, in the insertion configuration, the portafilter is angularly offset (towards the left) with respect to a front configuration relative to the operator.

The fluid-tightening of the joint is obtained by means of a rotation of the portafilter, typically of about 30°-40°, in an anti-clockwise direction, starting from the insertion configuration, in such a way as to move the tabs along the slots until the free edge of the portafilter is compressed against the front gasket of the hot water dispensing body. In the fluid-tightening configuration, therefore, the portafilter is angularly offset with respect to the insertion configuration and, typically, is arranged frontally with respect to the operator.

The Applicant has found that coffee machines of the type described above have a series of drawbacks well known to operators in the sector, one of which is represented by the fact that the mechanical seal between the portafilter and the hot water dispensing body depends totally on the effectiveness of the fluid-tightening of the joint, which is delegated exclusively to the action of the operator, i.e., to how much the latter manages to compress the portafilter against the hot water dispensing body when rotating it from the insertion configuration to the fluid-tightening configuration. As is known, this operation requires from the operator not only a certain technique, but above all a consistent effort, which can be extremely burdensome from a physical point of view when it must be repeated for hundreds, if not thousands, of times a day, as for example in the case of a barista. Furthermore, the effort of fluid-tightening the portafilter is not even the only one required of the operator since its removal also requires the operator to apply a non-negligible force, at least in the first phase of the rotation to move it away from the delivery configuration.

To relieve the operator of the physical effort associated with the fluid-tightening and release of the portafilter to/from the hot water dispensing body, in WO 2021/255704 A1 the Applicant proposed an automation device for fluid-tightening and releasing the joint according to two different embodiments, one completely automatic, the other partially automatic or manual "servo-assisted".

In particular, in both embodiments, the joint is made in two parts mounted one on the hot water dispensing body and the other on the portafilter so as to be able to be rotated relative to each other in opposite directions by a motorized drive group to thus assume, by effect of a relative rotation of one part with respect to the other in a tightening direction, a fluid-tightening configuration in which the portafilter and the hot water dispensing body are fluid-tight coupled.

In the first embodiment, the completely automatic one, the rotation of the two parts of the joint relative to each other is carried out completely by the motorized drive group in response to simple pushes by an operator exerted on the portafilter in opposite directions, conventionally towards the right to fluid-tighten it to, and towards the left to release it from, the hot water dispensing body.

In the second embodiment, the manual servo-assisted one, the fluid-tightening of the joint begins in a traditional manner, i.e., following the rotation towards the right of the portafilter with respect to the hot water dispensing body carried out manually by a user, but is completed by the motorized drive group, thus saving the operator the fluid-tightening effort, while the release of the joint occurs automatically in response to a simple push towards the right exerted on the portafilter, as in the first embodiment.

### OBJECT AND SUMMARY OF THE INVENTION

The Applicant has observed that the automation of the fluid-tightening and release of the joint described in WO 2021/255704 A1 enables the development of improvements in the control of the operation of coffee machines and in particular of the brewing of ground coffee and the ease of use of coffee machines.

The object of the present invention is therefore to further improve the technology described in WO 2021/255704 A1.

According to the present invention, a machine for the preparation of beverages is provided, as claimed in the attached claims.

### BRIEF DESCRIPTION OF THE DRAWINGS

Figure 1 shows, in perspective view, the coffee machine according to the invention.
Figure 2 shows a coffee beverage dispensing assembly of the coffee machine of Figure 1.
Figure 3 shows, in section, a portafilter of the coffee machine of Figure 1.
Figure 4 shows a block diagram of a user interface of the coffee machine of Figure 1.

### DETAILED DESCRIPTION OF PREFERRED EMBODIMENTS OF THE INVENTION

The present invention will now be described in detail with reference to the attached Figures to allow a skilled person to realize and use it. Various modifications to the described embodiments will be immediately apparent to skilled persons and the generic principles described can be applied to other embodiments and applications without thereby departing from the protective scope of the present invention, as defined in the attached claims. Unless defined otherwise, all technical and scientific terms used herein have the same meaning commonly used by persons of ordinary experience in the field of relevance of the invention. In case of conflict, the present description, including the definitions provided, will be binding. Furthermore, the examples are provided for purely illustrative purposes and as such should not be considered limiting. To facilitate the understanding of the invention, reference will be made to some specific embodiments, and a specific language will be used to describe the same. The terminology used has the sole purpose of describing only particular embodiments and is not intended to limit the scope of the invention.

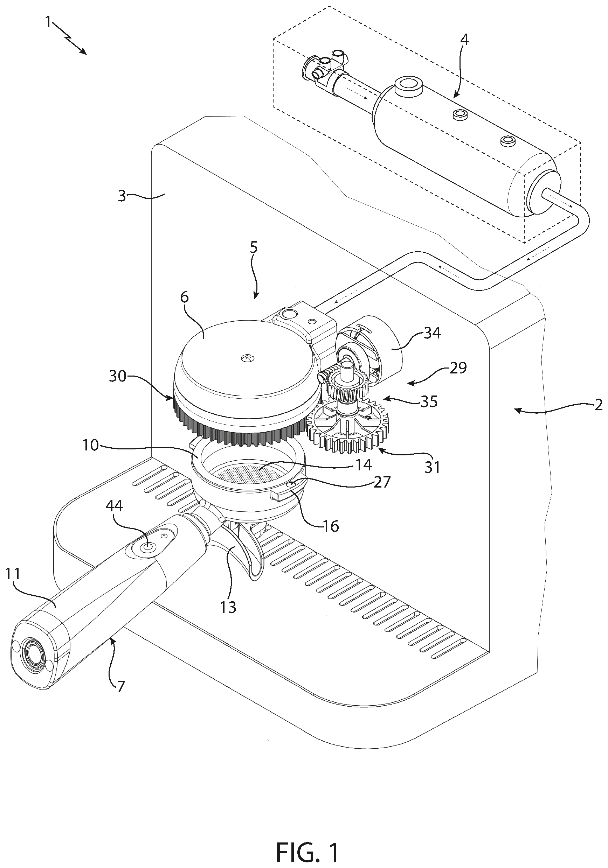

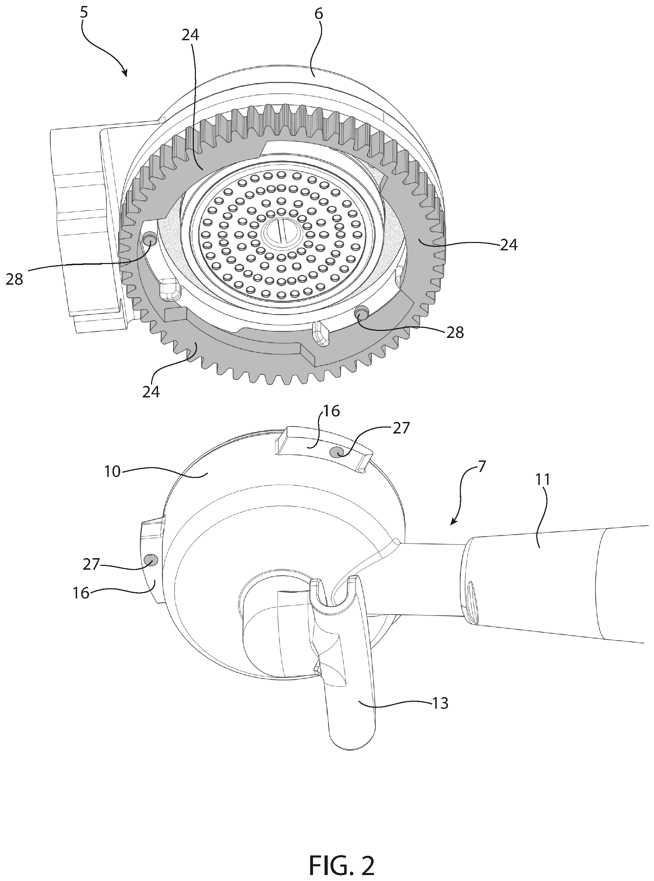

In Figures 1-3, a semi-automatic coffee machine commonly used for professional bar or domestic use is shown and referenced as a whole with the reference numeral **1**.

The coffee machine **1** comprises a box-like frame **2** delimited frontally, with respect to a user, by a front wall **3**, and a plurality of components for the production of coffee beverages supported by the frame **2** and comprising, among others, a pressurised hot water production assembly **4** and one or more coffee beverage dispensing assemblies **5**, only one of which is shown in Figure 1 for illustrative purposes, and arranged to receive pressurised hot water from the pressurised hot water production assembly **4** and to prepare and dispense coffee beverages by brewing powdered coffee with pressurised hot water.

Each coffee beverage dispensing assembly **5** comprises a hot water dispensing body **6** cantilevered from the front wall **3** of the frame **2** and operable to dispense pressurised hot water for the production of coffee beverages; and a portafilter **7** adapted to contain loose ground coffee or coffee contained in a single-use pod or capsule and to releasably and fluid-tight engage the hot water dispensing body **6** to receive therefrom pressurised hot water for the preparation of coffee beverages by brewing the ground coffee contained in the portafilter **7** with the pressurised hot water.

The hot water dispensing body **6** is generally cup-like shaped, with a concavity facing downwards, and comprises a tubular side wall and a bottom wall, in the centre of which a water supply duct opens and a water distribution shower is arranged in fluid communication with the water supply duct.

The portafilter **7** comprises a cup **10** open at the top and a handle **11** extending radially from the cup **10** to be gripped by a user to fluid-tighten and release the cup **10** to/from the hot water dispensing body **6**. The cup **10** internally houses a cup-shaped filter **14** to contain an amount of loose ground coffee or in the form of a pod or a capsule and preferably made of metallic material, conveniently stainless steel, with a perforated bottom wall, and is provided, on the bottom, with a delivery spout for a coffee beverage **13** of the one- or two-way type, which communicates fluidly with the cup **10** through a feed duct and is coupled to the cup **10** conveniently in a removable manner to allow the configuration of the portafilter **7** to deliver the coffee beverage in a single or in two cups simultaneously.

Close to its own open end, the cup **10** has a number of appendages or tabs **16**, which protrude radially outwards from the cup **10** and are shaped to cooperate, in a known manner and, hence, not described in detail, with respective appendages or tabs **24** carried by the hot water dispensing body **6** when the portafilter **7** is coupled to the hot water dispensing body **6** to form a bayonet joint to allow the portafilter **7** to be removably and fluid-tightened to the hot water dispensing body **6**. In the examples shown in the attached Figures, the tabs **16** are in a number of three and are arranged angularly equispaced along a perimeter edge of the cup **10**. According to variants not shown, the tabs **16** may also be in a number of two, arranged on diametrically opposite parts of the cup **10**, or in a number greater than three.

The tabs **16** lie substantially on a plane perpendicular to the longitudinal axis of the cup **10** and are delimited inferiorly by respective inclined planes, which all have the same inclination and the same orientation with respect to the plane of lying of the tabs **16** and are suitable for slidably engaging respective matching planes of the tabs **24** in response to a relative rotation, relative to each other, of the tabs **24** and the tabs **16**, in such a way as to cause an upward displacement of the portafilter **7** and the compression of the latter against the hot water dispensing body **6**, with consequent fluid-tightening of the portafilter **7** to the hot water dispensing body **6**, thanks to the presence of a gasket provided in the hot water dispensing body **6**.

To detect the correct positioning of the portafilter **7** with respect to the hot water dispensing body **6** before fluid-tightening thereof, the tabs **16** are provided with respective permanent magnets **27** arranged to cooperate with corresponding magnetic sensors **28** arranged on the bottom wall of the hot water dispensing body **6** in positions such as to be facing the corresponding permanent magnets **27** on the tabs **16** when the portafilter **7** is brought close to the hot water dispensing body **6**, so as to be able to detect its presence.

To alleviate the physical effort required to an operator to carry out the operations of fluid-tightening the portafilter **7** to and releasing the portafilter **7** from the hot water dispensing body **6**, the operations are automated or servo-assisted by means of an automation device **29** disclosed in WO 2021/255704 A1 in the name of the Applicant. Since the fluid-tightening of the portafilter **7** to and release of the portafilter **7** from the hot water dispensing body **6** are determined by a relative rotation between the tabs **16** and the tabs **24**, there is no conceptual difference, but only an implementation difference, between a first type of actuation, in which the tabs **24** rotate relative to the tabs **16**, and a second type of actuation, in which the tabs **16** rotate relative to the tabs **24**.

The automation device **29** comprises a toothed ring nut **30** rotatably mounted on the hot water dispensing body **6** around a longitudinal axis thereof, and a drive group **31** operatively coupled to the toothed ring nut **30** to rotate it around its own axis and move it between a rest configuration, in which it allows the operator to couple the portafilter **7** to the hot water dispensing body **6**, and an operative configuration, in which the portafilter **7** is fluid-tightened to the hot water dispensing body **6**. Depending on the type of actuation, the toothed ring nut **30** brings the tabs **24** into rotation relative to the tabs **16**, or, vice versa, brings the latter into rotation relative to the former to fluid-tighten the portafilter **7** to or, vice versa, release the portafilter **7** from the hot water dispensing body **6**.

In particular, in the first type of actuation, the toothed ring nut **30** is integral with the tabs **24** to cause them to rotate relative to the tabs **16**, while in the second type of actuation, the tabs **24** are integral with the cup **10** and the toothed ring nut **30** is angularly couplable to the tabs **16** to cause them to rotate relative to the tabs **24**.

In an embodiment, the drive group **31** comprises an electric motor or a gearmotor **34** arranged inside the frame **2**, and a transmission **35** of the gear type, as in the shown example, or of the toothed belt type to allow greater freedom in positioning the gearmotor **34**. The transmission **35** is arranged to take the rotary motion from an output shaft of the electric motor **34** and transmit it, appropriately reduced, to the toothed ring nut **30**. Preferably, the output shaft of the electric motor **34** extends through the front wall **3** of the frame **2** and the transmission **35** is arranged outside the frame **2**. For greater construction details of the automation device **29**, reference may made to the above-mentioned WO 2021/255704 A1, the content of which is intended to be incorporated here by reference.

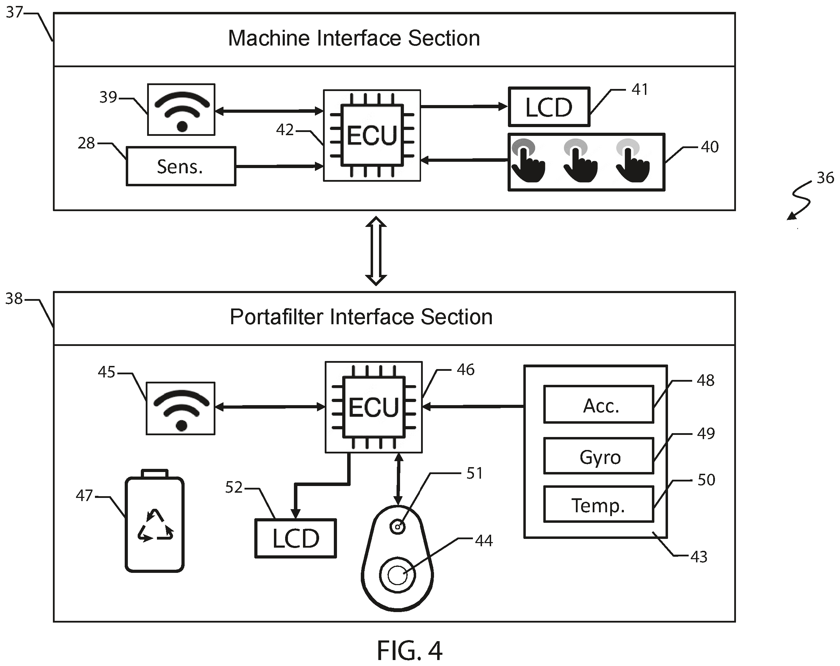

With reference to Figure 4, the coffee machine **1** further comprises a user interface **36** designed to allow a user to select the coffee beverages that the coffee machine **1** is capable of dispensing and to control the operation of the coffee machine **1**, in particular to allow the portafilter **7** to be fluid-tightened to and released from the respective hot water dispensing body **6** and the dispensing of the coffee beverages to be started and stopped.

The user interface **36** comprises, for each coffee beverage dispensing assembly **5**, two sections designed to wirelessly mutually communicate:
a machine interface section **37** carried by the frame **2**, for example arranged on the front wall **3** and possibly also on the upper wall of the frame **2**, and
a portafilter interface section **38** integrated into the portafilter **7**.

The machine interface section **37** comprises:
a wireless data communication module **39** to allow the coffee machine **1** to receive and transmit data;
one or more traditional manually-operated controls **40** (not shown) of a type chosen on the basis of operational and commercial needs, such as, for example, mechanical (pressure-operated) or touch-sensitive or touch-responsive (capacitive) keys or buttons, or rotary knobs or even a touch-sensitive panel designed to detect simple touches or more complex gestures performed by a user;
a graphic display **41** to display information relating to the operation of the coffee beverage dispensing assembly **5**, such as, for example, the beverage currently being produced, the progress of the coffee beverage dispensing, the temperature of the water supplied to the coffee beverage dispensing assembly **5**, etc.; and
an electronic control unit **42** in communication with, conveniently electrically connected to, the pressurised hot water production assembly **4**, the magnetic sensors **28**, the automation device **29**, the wireless data communication module **39**, the controls **40** and the graphic display **41** and configured to receive and transmit data through the wireless data communication module **39** and to control the operation of the respective coffee beverage dispensing assembly **5**, in particular the automation device **29** to fluid-tighten the portafilter **7** to and release the portafilter **7** from the hot water dispensing body **6** and the pressurised hot water production assembly **4** to control the supply of pressurised hot water to the hot water dispensing body **6** and, consequently, the production of coffee beverages by the coffee beverage dispensing assembly **5**.

The portafilter interface section **38** is configured to detect and output an output representative of one or different actions performed by a user on the portafilter **7** and/or of movements of the portafilter **7** during its use and, optionally, of one or different physical quantities of the dispensed coffee beverage, in particular temperature thereof, and wirelessly transmit the output to the machine interface section **37** in such a way that the latter can control the operation of the coffee machine **1** in response to the actions performed by a user on the portafilter **7**, to the movement of the portafilter **7** and to the physical quantities of the dispensed coffee beverage.

To this end, the portafilter interface section **38** comprises a plurality of electrical and electronic components carried in whole or in part by a printed circuit electronic board integrated into the handle **11** of the portafilter **7** and comprising:
a sensory system **43** to detect and output an output representative of one or different quantities of the portafilter **7** that allow the position of the portafilter **7** to be determined with respect to the hot water dispensing body **6** and possibly also the movement to which the portafilter **7** is subjected during use, and, optionally, one or different physical quantities of the dispensed coffee beverage, in particular the temperature, to be determined;
one or more controls **44**, only one of which is shown in the Figures, arranged on the handle **11** of the portafilter **7** and manually operable by a user to control the operation of the relative coffee beverage dispensing assembly **5**, in particular to fluid-tighten the portafilter **7** to and release the portafilter **7** from the hot water dispensing body **6** and control the supply of hot water to the portafilter **7**;
a wireless data communication module **45** arranged in the handle **11** of the portafilter **7** to communicate with the wireless data communication module **39**;
an electronic control unit **46**, conveniently in the form of a microcontroller, also arranged in the handle **11** of the portafilter **7** and in communication with, conveniently electrically connected to, the sensory system **43** to receive the output thereof, the control **44** to detect operations thereof by a user and the wireless data communication module **45** to communicate with the electronic control unit **42** to transmit data indicative of the output of the sensory system **43** and the operations of the control **44**; and
an electric energy source **47** also arranged in the handle **11** of the portafilter **7** and connected to the sensory system **43**, the wireless data communication module **45** and the electronic control unit **46** to electrically power the same.

The sensory system **43** comprises one or different probes or sensors preferably made with MEMS/NEMS technology and comprising one or more of:
an accelerometer **48** and a gyroscope **49** to measure and output outputs indicative of the acceleration and the angular velocity to which the portafilter **7** is subjected, so as to allow movements thereof by a user to be tracked as well as the correct positioning of the portafilter **7** of with respect to the hot water dispensing body **6** to be detected; and, optionally,
a temperature probe **50** arranged in the cup **10** of the portafilter **7**, below the filter **14**, to measure and output an output indicative of the temperature of the dispensed coffee beverage, so as to allow the temperature of the water delivered by the pressurised hot water production assembly **4** and, consequently, of the dispensed coffee beverage to be adjusted in the subsequent coffee beverage preparation cycles.

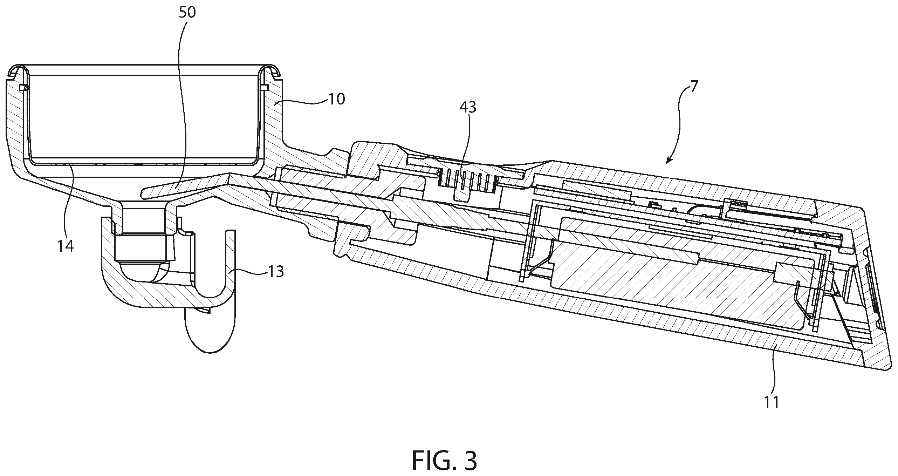

The control **44** is made with a technology chosen on the basis of application and commercial circumstances, conveniently, in the form of a mechanical (pressure-operated) command button, as in the example shown in Figure 3, or of a touch-sensitive or touch-responsive button or key, or even in the form of a touch-sensitive mini-panel designed to detect simple touches or more complex gestures performed by a user.

The electrical energy source **47** can be in the form of a common electric battery either non-electrically rechargeable or electrically rechargeable through a suitable standard electrical connector, conveniently USB-C or by means of wireless or inductive electric charging technology with RF energy.

The wireless data communication modules **39** and **45** can be made according to any present or future wireless technology suitable for the specific application. In one embodiment, the wireless data communication modules **39** and **45** are conveniently based on short-range radio communication technologies, in particular Wi-Fi technology, as in the example shown, which allows them to communicate through a wireless local area network (WLAN), or a wireless mesh network, or Bluetooth low power technology, conveniently according to the 4.0 specification and alternatively known by the names Bluetooth Low Energy, Bluetooth LE or Bluetooth Smart, or even ZigBee technology.

The portafilter interface section **38** can also conveniently comprise a visual or acoustic signalling device **51**, in the example shown in the form of a simple LED, to signal the presence and the correct positioning of the portafilter **7** with respect to the hot water dispensing body **6** to allow a user to start the coffee beverage preparation, and which could optionally also be accompanied by a graphic display **52** to display information relating to the portafilter **7** and/or to the coffee beverage currently being delivered, such as, for example, the temperature of the dispensed coffee beverage.

The electronic control unit **46** is configured to:
receive and locally store the output of the sensory system **43**, in particular of the accelerometer **48** and of the gyroscope **49** and, where present, of the temperature probe **50**;
detect operations of the control **44**; and
transmit to the electronic control unit **42**, through the wireless data communication module **45**, data indicative of the output of the sensory system **43** and of the detected operations of the control **44**.

The electronic control unit **42** is configured to:
store one or different coffee beverage preparation recipes;
receive, through the wireless data communication module **39**, the data transmitted by the electronic control unit **46** through the wireless data communication module **45**;
determine the operations of the control **44** on the basis of the received data indicative of the detected operations of the control **44**;
track the movement of the portafilter **7** on the basis of the outputs of the accelerometer **48** and the gyroscope **49**;
detect the presence and the correct positioning of the portafilter **7** with respect to the hot water dispensing body **6** on the basis of the outputs of the magnetic sensors **28**, possibly also with the aid of the gyroscope **49**; and
control the supply of hot water to the hot water dispensing body **6** on the basis of the detected operations of the control **44** and of the output of the sensory system **43**, and in particular generate commands for the automation device **29** and the pressurised hot water production assembly **4** to cause, respectively, one or both of:
   the portafilter **7** to be fluid-tightened to and release from the hot water dispensing body **6** in response to the detected operations of the control **44**, when the portafilter **7** is correctly brought close to the hot water dispensing body **6**; and
   supply of hot water to the portafilter **7** to be started and stopped in response to the detected operations of the control **44**, when the portafilter **7** is fluid-tightened to the hot water dispensing body **6**.

The electronic control unit **42** may also optionally be configured to adjust the temperature of the hot water supplied by the pressurised hot water production assembly **4** on the basis of the temperature of the dispensed coffee beverage measured by the temperature probe **50**.

The electronic control unit **42** may also conveniently be configured to determine the number of coffee beverages dispensed on the basis of the received data indicative of the detected operations of the control **44**.

The electronic control unit **42** may also conveniently be programmed to:
determine the movement or stillness of the portafilter **7** on the basis of the output of the accelerometer **48**;
activate a stand-by mode when the portafilter **7** is still for a determined period of time, so as to bring both the coffee machine **1** and the portafilter **7** into an energy-saving condition to save the electrical energy accumulated in the electrical energy source **47** and, consequently, decrease its charging frequency; and
deactivate the stand-by mode to bring the coffee machine **1** back to an operative condition when the portafilter **7** is moved again.

In order to make the preparation of a specific coffee beverage simpler for a user, for example the coffee beverage most frequently selected or most commonly consumed by users of the coffee machine **1**, the electronic control unit **42** may also optionally be programmed to determine a specific gesture by a user on the portafilter **7**, for example a specific operation of the control **44**, such as, for example, a prolonged operation; read the stored recipe of that specific coffee beverage; and start the preparation of the specific coffee beverage on the basis of the recipe read upon detection of the specific gesture of the user on the control **44**.

## Claims

1. A beverage preparation machine (**1**) comprising:
a pressurised hot water production assembly (**4**); and
a coffee beverage dispensing assembly (**5**) configured to receive pressurised hot water from the pressurised hot water production unit (**4**) and to prepare and dispense beverages by brewing a brewing material with pressurised hot water;
the coffee beverage dispensing assembly (**5**) comprises:
a hot water dispensing body (**6**) configured to dispense pressurised hot water for producing beverages;
a portafilter (**7**) configured to contain a brewing material and to be releasably couplable to the hot water dispensing body (**6**) to receive hot water therefrom for brewing the brewing material and producing a beverage by brewing the brewing material with pressurised hot water;
an automation device (**29**) operable to fluid-tighten the portafilter (**7**) to and release the portafilter (**7**) from the hot water dispensing body (**6**); and
a user interface (**36**) configured to allow coffee beverages dispensable by the coffee machine (**1**) to be selected by a user, the portafilter (**7**) to be fluid-tightened coupled to and released from the hot water dispensing body (**6**) and beverage dispensing to be started and stopped;
the user interface (**36**) comprises a machine interface section (**37**) and a portafilter interface section (**38**) respectively carried by the beverage preparation machine (**1**) and by the portafilter (**7**) and designed to wirelessly mutually communicate.

2. The beverage preparation machine (**1**) of claim **1**, wherein:
the portafilter interface section (**38**) is configured to detect and wirelessly communicate to the machine interface section (**37**) an output representative of one or different actions performed by a user on the portafilter (**7**) and optionally of movements which the portafilter (**7**) is subjected to during use and/or of one or different physical quantities of the dispensed beverage, in particular temperature, such as to allow the machine interface section (**37**) to control operation of the beverage preparation machine (**1**) accordingly; and
the machine interface section (**37**) is configured to receive the output communicated by the portafilter interface section (**38**) and control, based thereon, either one or both of the automation device (**29**) and the pressurised hot water production assembly (**4**) to cause, respectively, the portafilter (**7)** to be the fluid-tightened to and released from the hot water dispensing body (**6**) and beverage dispensing to be started and stopped in response to actions performed by a user on the portafilter (**7**).

3. The beverage preparation machine (**1**) of claim **2**, wherein, in order to make it easier for a user to prepare a specific beverage, such as, for example, the beverage most frequently selected or most commonly consumed by user of the beverage preparation machine (**1**), the machine interface section (**37**) is further configured to determine, based on the output from the portafilter interface section (**38**), a specific gesture of a user on the portafilter (**7**) and to start the preparation of the specific beverage in response to the determined specific gesture of a user on the portafilter (**7**).

4. The beverage preparation machine (**1**) of claim **2** or **3**, wherein:
the machine interface section (**37**) comprises:
one or more magnetic sensors (**28**) carried by the hot water dispensing body (**6**) in positions such that they face corresponding permanent magnets (**27)** carried by the cup (**10**) of the portafilter (**7**) when it is placed closer to the hot water dispensing body (**6**) to allow the presence of the portafilter (**7**) to be detected in a position close to the hot water dispensing body (**6**);
a wireless data communication module (**39**) operable to allow the beverage preparation machine (**1**) to receive and transmit data; and
an electronic control unit (**42**) in communication with the pressurised hot water production assembly (**4**), the magnetic sensors (**28**), the automation device (**29**) and the wireless data communication module (**39**) and configured to control operation of the automation device (**29**) to fluid-tighten the portafilter (**7**) to and release the portafilter (**7**) from the hot water dispensing body (**6**) and of the pressurised hot water production assembly (**4**) to control supply of pressurised hot water to the hot water dispensing body (**6)** and consequently, production of beverages by the coffee beverage dispensing assembly (**5**);
the portafilter interface section (**38**) comprises:
a sensory system (**43**) to detect and output an output representative of one or different quantities that allow a position of the portafilter (**7**) to be determined with respect to the hot water dispensing body (**6**) and, optionally, of movements of the portafilter (**7**) during use and/or of one or different physical quantities of the dispensed beverage, in particular temperature;
a control (**44**) arranged on a handle (**11**) of the portafilter (**7**) and manually operable by a user to control operation of the coffee beverage dispensing assembly (**5**);
a wireless data communication module (**45**) arranged in the handle (**11**) of the portafilter (**7)** to communicate with the wireless data communication module (**39**) of the machine interface section (**37**); and
an electronic control unit (**46**) arranged in the handle (**11**) of the portafilter (**7)** and in communication with the sensory system (**43**) to receive an output thereof, the control (**44**) to detect operations thereof by a user, and the wireless data communication module (**45**) to communicate with the electronic control unit (**42**) of the machine interface section (**37**) and transmit data indicative of an output of the sensory system (**43**) and of operations of the control (**44).**

5. The beverage preparation machine (**1**) of claim **4**, wherein the sensory system (**42**) comprises:
an accelerometer (**48**) and a gyroscope (**49**) to measure and output outputs indicative of acceleration and angular velocity which the portafilter (**7**) is subjected to during use, so as to allow movement thereof by a user to be tracked, as well as correct positioning of the portafilter (**7**) with respect to the hot water dispensing body (**6**) to be detected; and, optionally,
a temperature probe (**50**) arranged in the cup (**10**) to measure and output an output indicative of a temperature of the beverage dispensed, so as to allow the temperature of the water dispensed by the pressurised hot water dispensing unit (**4**) and, consequently, of the dispensed beverage, to be adjusted in subsequent beverage preparation cycles.

6. The beverage preparation machine (**1**) of claim **4** or **5**, wherein the control (**44**) is in the form of a push or touch or touch-sensitive button or of a touch-sensitive mini-panel capable of detecting simple touches or more complex gestures by a user.

7. The beverage preparation machine (**1**) of any one of claims **4** to **6**, wherein the portafilter interface section (**38**) further comprises a visual or acoustic signalling device (**51**), conveniently in the form of a LED, to signal the presence and correct positioning of the portafilter (**7**) with respect to the hot water dispensing body (**6**) so as to allow a user to start the beverage preparation; and, optionally, a graphic display (**52**) to display information relative to the portafilter (**7**) and/or the dispensed beverage.

8. The beverage preparation machine (**1**) of any one of claims **4** to **7**, wherein the electronic control unit (**46**) of the portafilter interface section (**38**) is configured to:
receive the output of the sensory system (**43**);
detect operations of the control (**44**); and
transmit to the electronic control unit (**42**) of the machine interface section (**37**), via the wireless data communication module (**45**), data indicative of the output of the sensory system (**43)** and of the detected operations of the control (**44**);
the electronic control unit (**42**) of the machine interface section (**37**) is configured to:
store one or different beverage preparation recipes;
receive, via the wireless data communication module (**39**), data transmitted by the electronic control unit (**46**) of the portafilter interface section (**38**) via the wireless data communication module (**45**);
determine operations of the control (**44**) based on the received data indicative of the operations of the control (**44**);
track the movement of the portafilter (**7**) during use based on the outputs of the accelerometer (**48**) and gyroscope (**49**);
detect the presence and correct positioning of the portafilter (**7**) with respect to the hot water dispensing body (**6**) based on the outputs of the magnetic sensors (**28**) and gyroscope (**49**); and
control the automation device (**29**) and the pressurised hot water production unit (**4**) to cause, respectively, one or both of:
the portafilter (**7**) to be fluid-tightened to and released from the hot water dispensing body (**6**) in response to detected operations of the control (**43**), when the portafilter (**7**) is properly placed close to the hot water dispensing body (**6**);
supply of hot water to the portafilter (**7**) to be started and stopped in response to detected operations of the control (**43**), when the portafilter (**7**) is fluid-tightened to the hot water dispensing body (**6**).

9. The beverage preparation machine (**1**) of claim **8**, wherein the electronic control unit (**42**) of the machine interface section (**37**) is further configured to control the pressurised hot water production unit (**4**) based on the temperature of the dispensed beverage measured by the sensory system (**43**) so as to adjust the temperature of the hot water dispensed by the pressurised hot water production unit (**4**).

10. The beverage preparation machine (**1**) of claim **8** or **9**, wherein the electronic control unit (**42**) of the machine interface section (**37**) is further configured to determine the movement or stillness of the portafilter (**7**) based on the output of the accelerometer (**48**), activate a stand-by mode to bring the beverage preparation machine (**1**) into an energy-saving condition when the portafilter (**7**) is still for a given period of time, and deactivate the stand-by mode to bring the beverage preparation machine (**1**) back into an operating condition when the portafilter (**7**) is moved anew.
